# EUROPEAN PATENT APPLICATION

(11) **EP 4 467 686 A1**
(43) Date of publication of application: **27.11.2024**
(21) Application number: 23315210.7
(22) Date of filing: 24.05.2023
(51) Int. Cl.: C25B 1/24, C25B 9/23, C25B 15/08, C01B 7/09, B01D 17/02

(54) **PRODUCTION PROCESS OF BROMINE**

(71) Applicant: TotalEnergies OneTech, 92400 Courbevoie (FR)
(72) Inventor: Veryasov, Gleb, B-7181 Seneffe (BE)
(74) Representative: Mellet, Valérie Martine

(57) **Abstract**

The disclosure concerns a process for bromine production comprising an electrolysis on a hydrogen bromide aqueous solution (5) to convert at least a part of the bromide into bromine by operating one or more electrolytic cells (3) under electrolysis conditions; recovering a liquid effluent (9) comprising bromine from the anode side; and subjecting said liquid effluent (9) to a decanting step in a decanter (11) to obtain a first liquid phase (17) comprising bromine and a second liquid phase (15) comprising unreacted hydrogen bromide.

## Description

### Technical field

The present disclosure pertains to a production process of bromine from aqueous hydrogen bromine solutions, and preferably a production process of dry bromine. The invention also provides an electrolyzing cell for producing bromine.

### Technical background

Bromine is a compound used in different domains of industry. For instance, it finds applications in production flame retardants or bromobutane rubbers, used in tyres.

Yet production of bromine remains complex and costly. By way of illustration, bromine may be obtained by electrolysis. Electrolysis of hydrogen bromide in aqueous phase is generally applied for production of hydrogen and/or recovery of bromine from streams comprising hydrogen bromide (HBr).

The reaction could be written in the following way:
2HBr(aq) 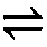 H₂ + Br₂

Bromine is almost insoluble in water, however it could be dissolved in HBr solution, as follows:
Br₂ + HBr(aq) 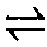 HBr₃(aq)

Depending on the molar ratios, different anions are formed with a general formula [Br₂ₙ₊₁]-, where n = 1,2,3, etc. Therefore, in standard operating conditions the liquid effluent will be a homogeneous solution of Br₂ in aqueous HBr.

Specific applications of Br₂ require it as a pure compound. Yet, drying, or separation process of Br₂ from solution requires significant amounts of energy, which impacts the final production cost of Br₂.

US5385650 discloses a process for recovering bromine from an acidic solution containing bromide ion comprising passing an electric current through said solution between an anode in contact with said solution and a cathode in electrical communication with said solution, thereby generating bromine by electrolysis of said solution at said anode to produce an electrolyzate containing bromine; and separating bromine as a vapor from said electrolyzate under negative pressure.

CN113789525 provides a process for electrolytic acidification of sodium bromide to produce bromine comprising the following steps:
a) The sodium bromide solution of a certain concentration is acidified with hydrochloric acid to obtain an acidified sodium bromide solution;
b) The acidified sodium bromide solution is pumped into the bottom of the electrolytic cell according to a certain flow rate, and the generated hydrogen enters the hydrogen scrubbing tower from the top of the electrolytic cell and removes a small amount of bromine gas for storage, and the generated bromine is dissolved in the electrolytic cell. In the acidified sodium bromide solution, a mixed solution is formed and enters the bromine distillation tower from the top overflow port of the electrolytic cell;
c) The mixed solution passes through the packing layer after being sprayed in the bromine distillation tower and is heated from top to bottom by gravity, and is heated by the bottom-up steam through the bottom of the bromine distillation tower;
d) The bromine in the mixed solution is steamed out in the bromine distillation tower and mixed with part of the water vapor, and then enters the bromine condenser from the top of the bromine distillation tower, and the residual liquid after steaming the bromine reaches the bottom of the bromine distillation tower, side by side to the residual liquid storage tank;
e) in the bromine condenser, bromine vapor and water vapor are condensed into a liquid state to form a mixture of water and bromine, and then enter the bromine-water separation bottle for separation to obtain bromine.

US2018222776 provides an electro generation system for the oxidation of bromide to bromine in an aqueous electrolyte solution comprising: a treatment chamber comprising at least one electrochemical cell to contain an aqueous electrolyte solution and an inlet and an outlet, wherein the aqueous electrolyte solution comprises bromide ions, chloride ions, or a mixture of bromide and chloride ions; at least one anode in the treatment chamber; and at least one cathode in the treatment chamber; a power supply in communication with the at least one anode and the at least one cathode to generate an electric current sufficient to generate bromine, chlorine, chloride ions, or a combination thereof, and reduce bromate formation in the aqueous electrolyte solution; an electrolyte reservoir for holding the aqueous electrolyte solution connected to the inlet; an aqueous electrolyte solution flow controller to control a selected volume of the electrolyte solution between the electrolyte reservoir and the electrochemical cell; and a pH adjusting mechanism comprising an acid reservoir for holding an acid connected to the treatment chamber, a pH monitor in communication with the treatment chamber; and a control unit in communication with the pH monitor and the acid reservoir to adjust the pH by adding the acid from the acid reservoir to the aqueous electrolyte solution.

There is a need for improvement in the process for recovery of the bromine produced by electrolysis of hydrogen bromide in aqueous phase. In particular there is need for a process that is simple and easy to implement at an industrial scale and that is cheap.

### Summary

According to a first aspect, the disclosure provides for a process for bromine production comprising the following steps:
a) providing one or more electrolytic cells each comprising an anode, a cathode and an ion-exchange membrane placed between the anode and the cathode;
b) providing a first input flow at the anode side of the one or more electrolytic cells that is or comprises a hydrogen bromide aqueous solution; and a second input flow at the cathode side of the one or more electrolytic cells that is or comprises water or an aqueous solution;
c) performing an electrolysis to convert at least a part of the hydrogen bromide of the hydrogen bromide aqueous solution into bromine by operating the one or more electrolytic cells under electrolysis conditions comprising a voltage of at least 2.5 V; and
d) recovering a liquid effluent comprising bromine from the anode side;
the process is remarkable in that it further comprises a decanting step e) comprising passing the liquid effluent comprising bromine in a decanter to obtain a first liquid phase comprising bromine and a second liquid phase comprising unreacted hydrogen bromide; and optionally recovering the first liquid phase comprising bromine.

Surprisingly, it has been found that it was possible to perform a separation of bromine from the effluent of the electrolytic cells performing the electrolysis by a simple decantation step.

For example, the electrolysis conditions comprise a voltage of at least 3.2 V; preferably 4.0 V.

For example, the electrolysis conditions comprise a voltage ranging from 2.5 to 10.0 V; preferably from 3.2 to 9.0 V and more preferably from 4.0 to 8.0 V or from 4.0 to 10.0 V.

For example, the electrolysis conditions comprise an anode current density ranging from 4.0 to 10 kA/m²; preferably, from 4.5 to 9.0 kA/m²; more preferably, from 5.0 to 8.0 kA/m².

For example, in step c) the temperature of the solution during electrolysis ranges from 20 to 100°C; preferably from 60 to 85°C.

For example, the hydrogen bromide aqueous solution comprises from 30 to 48.3 wt.% of hydrogen bromide based on the total weight of the hydrogen bromide aqueous solution; or comprise at most 48.3 wt.% of hydrogen bromide based on the total weight of the hydrogen bromide aqueous solution.

For example, the second input flow at the cathode side has a pH ranging from 0.1 to 5.0; with preference ranging from 0.5 to 2.0.

For example, the second input comprises an aqueous solution of one or more mineral acids. With preference, the aqueous solution of one or more mineral acids comprises one or more mineral acids selected from hydrochloric acid (HCl), nitric acid (HNO₃), phosphoric acid (H₃PO₄), sulfuric acid (H₂SO₄), boric acid (H₃BO₃), hydrofluoric acid (HF), hydrobromic acid (HBr), perchloric acid (HClO₄), hydroiodic acid (HI) or any mixture thereof. With preference, the aqueous solution of one or more mineral acids has a pH ranging from 0.1 to 5.0, more preferably ranging from 0.5 to 2.0.

For example, the ion-exchange membrane is a cation-exchange membrane. With preference, the cation-exchange membrane further comprises an ionomer, more particularly an ionomer comprising fluoropolymer having one or more sulfonic acid groups or one or more pendant sulfonic acid groups. For example, the cation-exchange membrane comprises one or more layers, wherein the layer or at least one of the layers comprises an ionomer, more particularly an ionomer comprising fluoropolymer having one or more sulfonic acid groups or one or more pendant sulfonic acid groups. For example, the cation-exchange membrane is a proton-exchange membrane preferably comprising an ionomer, more particularly an ionomer comprising fluoropolymer having one or more sulfonic acid groups or one or more pendant sulfonic acid groups.

For example, the decanting step e) is performed during a time of at least 10 minutes; preferably during a time ranging from 10 minutes to 1 hour.

For example, the anode comprises an anode catalyst and the cathode comprises a cathode catalyst, and the anode catalyst and/or the cathode catalyst are or comprise one or more transition metal-based catalysts comprising ruthenium, rhodium, palladium, osmium, iridium, platinum, titanium, cobalt, iron, nickel, niobium, molybdenum, alloys of titanium, alloys of cobalt, alloys of iron, alloys of nickel, alloys of niobium, alloys of molybdenum, oxides of ruthenium, oxides of rhodium, oxides of palladium, oxides of osmium, oxides of iridium, and oxides of platinum and any mixtures thereof.

For example, the anode comprises an anode catalyst that comprises platinum; with preference the anode catalyst comprises at least 0.5 wt.% of platinum based on the total weight of the anode catalyst.

For example, step d) of recovering a liquid effluent from the anode chamber comprises cooling the liquid effluent at a temperature ranging from 10 to 40°C before the decanting step e).

For example, the decanting step e) comprises recovering the first liquid phase comprising bromine and said process further comprises a drying step f) performed on the said first liquid phase.

For example, the drying step f) is performed using a molecular sieve.

For example, the decanting step e) is performed at a pressure of at least 0.15 MPa.

According to a second aspect, the disclosure provides an installation for bromine production according to the process of the first aspect; wherein the installation comprises one or more electrolytic cells comprising an anode, a cathode, an anode chamber, a cathode chamber and a solid polymer electrolyte membrane separating the anode chamber from the cathode chamber; the installation is remarkable in that it comprises at least one decanter and means to convey the liquid effluent exiting the anodic chamber of the one or more electrolytic cells to a decanter.

For example, the one or more electrolytic cells are selected from zero-gap electrolytic cells, two-gap electrolytic cells, catholyte-containing one-gap electrolytic cells and catholyte-free one-gap electrolytic cells; preferably the one or more electrolytic cells are zero-gap electrolytic cells, such as a membrane electrode assembly (MEA).

For example, the means to convey the liquid effluent exiting the anodic chamber of the one or more electrolytic cells to a decanter comprises one or more heat exchangers.

For example, the installation comprises a drying unit comprising one or more molecular sieves.

The particular features, structures, characteristics or embodiments may be combined in any suitable manner, as would be apparent to a person skilled in the art from this disclosure, in one or more embodiments.

### Description of the figures

- Figure 1 illustrates an installation according to the disclosure
- Figure 2 illustrates the electrolytic cells configuration.
- Figure 3 illustrates a sample obtained according to the disclosure.

### Detailed description

For the disclosure, the following definitions are given:
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves *(e.g.,* from 1.0 to 5.0 includes both 1.0 and 5.0). Any numerical range recited herein is intended to include all sub-ranges subsumed therein.

The term "alkali metal" refers to an element classified as an element from the group 1 of the periodic table of elements, excluding hydrogen. According to this definition, the alkali metals are Li, Na, K, Rb, Cs and Fr.

The term "alkaline earth metal" refers to an element classified as an element from the group 2 of the periodic table of elements. According to this definition, the alkaline earth metals are Be, Mg, Ca, Sr, Ba and Ra.

The term "transition metal" refers to an element whose atom has a partially filled d sub-shell, or which can give rise to cations with an incomplete dsub-shell (IUPAC definition). According to this definition, the transition metals are Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg, and Cn. The metals Ga, In, Sn, Ti, Pb and Bi are considered as "post-transition" metal.

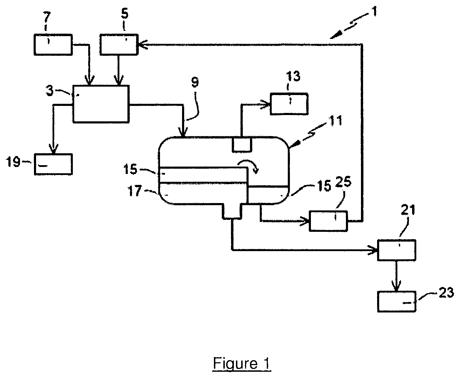

The present disclosure provides a process for bromine production and an installation to be used to perform such a process. The process and the installation will therefore be described jointly. Reference is made to figure 1 as regards the installation 1.

The process for bromine production comprises the following steps:
a) providing one or more electrolytic cells 3 each comprising an anode, a cathode and an ion-exchange membrane placed between the anode and the cathode;
b) providing a first input flow at the anode side of the one or more electrolytic cells 3 that is or comprises a hydrogen bromide aqueous solution 5; and a second input flow at the cathode side of the one or more electrolytic cells 3 that is or comprises water 7 or an aqueous solution;
c) performing an electrolysis to convert at least a part of the hydrogen bromide of the hydrogen bromide aqueous solution 5 into bromine by operating the one or more electrolytic cells 3 under electrolysis conditions comprising a voltage of at least 2.5 V; and
d) recovering a liquid effluent 9 comprising bromine from the anode side;
the process is remarkable in that it further comprises a decanting step e) comprising passing the liquid effluent 9 comprising bromine in a decanter 11 to obtain a first liquid phase 17 comprising bromine and a second liquid phase 15 comprising unreacted hydrogen bromide; and optionally recovering the first liquid phase 17 comprising bromine.

### As regards step a) of providing one or more electrolytic cells 3

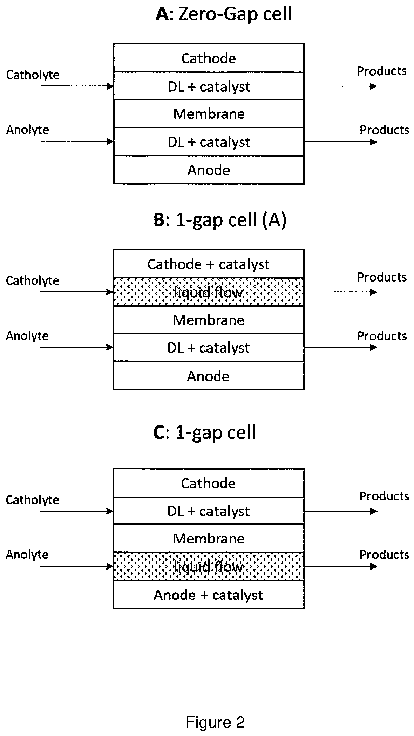

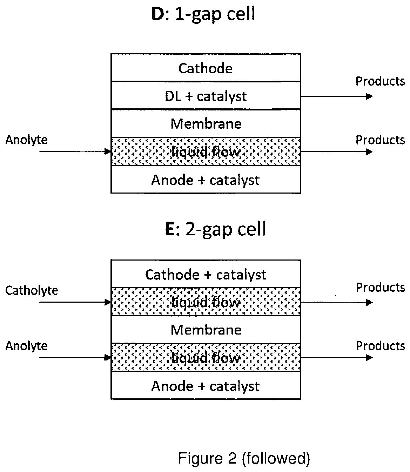

According to the disclosure the one or more electrolytic cells 3 are selected from zero-gap electrolytic cells, two-gap electrolytic cells, or one-gap electrolytic, which could be catholyte-free one-gap electrolytic cells. Preferably the one or more electrolytic cells are zero-gap electrolytic cells, such as membrane electrode assembly (MEA). The different configurations are illustrated in figure 2.

In the cases the electrolytic cell is a zero-gap electrolytic cell (figure 2A) or a one-gap electrolytic cell (figure 2C and figure 2D), then the cathode catalyst layer is in contact with the ion-exchange membrane.

In the cases the electrolytic cell is a zero-gap electrolytic cell (figure 2A) or a one-gap electrolytic cell (figure 2A) then the anode catalyst layer is in contact with the ion-exchange membrane.

in the case wherein the electrolytic cell is a two-gap electrolytic cell (figure 2E) none of the cathode catalyst layer and anode catalyst layer is in contact with the ion-exchange membrane. This is due to the presence of both a catholyte and an anolyte.

in figure 2, DL is for diffusion layer, which is a porous media which enable uniform distribution of reactive liquids of gases on the surface of the electrodes and transports of electrons. For example, the zero-gap cell and the one-gap cell comprise at least one diffusion layer as illustrated on Figure 2. Suitable materials for the diffusion layer are known to the person skilled in the art. It is preferred that the diffusion layer is a conductive material. For example, the diffusion layer is a composite material comprising polytetrafluoroethylene (PTFE) and a conductive material such as carbon particles.

The anode catalyst and the cathode catalyst may be any suitable catalyst known from the art. The anode catalyst and the cathode catalyst can be the same or different.

For example, the anode catalyst and/or the cathode catalyst are or comprise one or more transition metal-based catalysts comprising ruthenium, rhodium, palladium, osmium, iridium, platinum, titanium, cobalt, iron, nickel, niobium, molybdenum, alloys of titanium, alloys of cobalt, alloys of iron, alloys of nickel, alloys of niobium, alloys of molybdenum, oxides of ruthenium, oxides of rhodium, oxides of palladium, oxides of osmium, oxides of iridium, and oxides of platinum and any mixtures thereof.

For example, the anode catalyst comprises platinum; with preference the anode catalyst comprises at least 0.5 wt.% of platinum based on the total weight of the anode catalyst. However, it was reported that at high bromine concentration platinum losses could occur due to dissolution and poisoning (Kyu Taek Cho, Michael C. Tucker, Adam Z. Weber, Energy Technology, Volume 4, Issue 6, 2016, Pages 655-678).

Alternatively, DSA^{®} brand anode catalysts produced by De Nora company could be applied. This type of anode uses mixed metal oxide (MMO) coating which allows a long and stable operation.

Also, Lead Dioxide Titanium Electrode (Ti/PbO₂) anode could be used. The lead dioxide coating on titanium substrate has strong corrosion resistance and suitable for the media.

Mentioned anodes could be further modified by doping Ce or Bi metals to the anode catalyst using the techniques known in the art (Pengfei Xu, Xiaohong He, Junwei Mao and Yongming Tang, Journal of The Electrochemical Society, Volume 166, Number 13, 2019, 638).

For example, the cathode catalyst comprises platinum; with preference the cathode catalyst comprises 0.5 wt.% of platinum based on the total weight of the cathode catalyst.

The ion exchange membrane is a cation-exchange membrane (CEM), preferably a proton-exchange membrane (PEM). Both types of membranes are well-known by the person skilled in the art. Typical cation exchange membranes include proton conducting membranes, such as the perfluorosulfonic acid polymer available under the trade designation Nafion from E. I. du Pont de Nemours and Company (DuPont) of Wilmington, Del. A proton-exchange membrane, or polymer-electrolyte membrane (PEM), is a semipermeable membrane generally made from ionomers and designed to conduct protons while acting as an electronic insulator and reactant barrier, e.g., to oxygen and hydrogen gas.

Another example is commercial PEM membranes is Aquivion membranes developed by Solvay company.

Thus, the cation-exchange membrane can further comprise an ionomer, more particularly an ionomer comprising fluoropolymer having one or more sulfonic acid groups or one or more pendant sulfonic acid groups. For example, the cation-exchange membrane can comprise one or more layers, wherein the layer or at least one of the layers comprises an ionomer, more particularly an ionomer comprising fluoropolymer having one or more sulfonic acid groups or one or more pendant sulfonic acid groups.

For example, the ionomer comprises a perfluorinated sulfonic acid ionomer. For example, said perfluorinated sulfonic acid ionomer comprises sulfonated tetrafluoroethylene based fluoropolymer-copolymer (such as Nation^{®} or 1,1,2,2-Tetrafluoroethene;1,1,2,2-tetrafluoro-2-[1,1,1,2,3,3-hexafluoro-3-(1,2,2-trifluoroethenoxy)propan-2-yl]oxyethanesulfonic acid), SSC, Aciplex, Flemion, 3M-perfluorinated sulfonic acid ionomer, Aquivion, an ionene, or a combination thereof.

Thus, in an embodiment, the ion-exchange membrane is a proton exchange membrane comprising one or more layers, wherein the layer or at least one of the layers comprises an ionomer comprising a fluoropolymer having one or more pendant sulfonic acid groups.

### As regards step b) of providing a first input flow at the anode side and a second input flow at the cathode side

The first input flow provided at the anode side and is or comprises a hydrogen bromide aqueous solution 5.

For example, hydrogen bromide (HBr) is present in the hydrogen bromide aqueous solution 5 at a content of at least 30 wt.% of HBr based on the total weight of the hydrogen bromide aqueous solution 5; preferably at least 35 wt.%; more preferably at least 40 wt.%; even more preferably at least 45 wt.%.

In a preferred embodiment hydrogen bromide (HBr) is present in the hydrogen bromide aqueous solution 5 at a content of most 48.3 wt.% at 20 °C; and form a constant-boiling azeotrope mixture.

For example, hydrogen bromide (HBr) is present in the hydrogen bromide aqueous solution 5 at a content ranging from 10 to 48.3 wt.% of HBr based on the total weight of the hydrogen bromide aqueous solution 5; preferably ranging from 15 to 47.6 wt.%; more preferably ranging from 17 to 46 wt.%; even more preferably ranging from 19 to 45 wt.% or from 20 to 42 wt.% or from 21 wt.% to 40 wt.% or from 22 wt.% to 39 wt.%.

In a preferred embodiment, the first input flow (i.e., the hydrogen bromide aqueous solution 5) is metal-free.

In an embodiment, the second input flow is provided at the cathode side and is or comprises water 7 or an aqueous solution. Preferably, said input flow is an aqueous solution of one or more mineral acids, serving as a source of protons. With preference, said aqueous solution has a pH ranging from 0.1 to 5.0, preferably from 0.5 to 2.0.

For example, the second input comprises an aqueous solution of one or more mineral acids; with preference, the aqueous solution of one or more mineral acids comprises one or more mineral acids selected from hydrochloric acid (HCl), nitric acid (HNO₃), phosphoric acid (H₃PO₄), sulfuric acid (H₂SO₄), boric acid (H₃BO₃), hydrofluoric acid (HF), hydrobromic acid (HBr), perchloric acid (HClO₄), hydroiodic acid (HI) or any mixtures thereof. More preferably, the aqueous solution of one or more mineral acids comprises one or more mineral acids selected from hydrobromic acid (HBr), sulfuric acid (H₂SO₄), nitric acid (HNO₃), or any mixtures thereof.

### As regards step c) of performing an electrolysis

Operating the one or more electrolytic cells 3 comprises passing a current between the anode and the cathode.

For example, the electrolysis conditions comprise an anode current density of at least 4.0 kA/m²; preferably, at least 4.2 kA/m² or 4.5 kA/m²; more preferably, at least 5.0 kA/m² or 5.5 kA/m²; even more preferably at least 6.0 kA/m² and most preferably at least 6.2 kA/m² or at least 6.5 kA/m².

For example, the electrolysis conditions comprise an anode current density ranging from 4.0 to 10.0 kA/m²; preferably, from 4.5 to 9.0 kA/m²; more preferably, from 5.0 to 8.5 kA/m²; even more preferably from 6.0 to 8.0 kA/m² and most preferably from 6.2 to 7.8 kA/m² or from 6.5 to 7.5 kA/m².

For example, the electrolysis conditions comprise a voltage of at least 1.3 V or at least 2.0 V; preferably at least 2.5 V or at least 3.0 V, more preferably at least 3.5 V or at least 4.0 V, even more preferably at least 4.5 V, most preferably at least 5.0 V and even most preferably at least 5.2 V or at least 5.5 V.

For example, the electrolysis conditions comprise a voltage ranging from 1.3 V to 10.0 V or from 3.0 V to 10.0 V; preferably from 3.5 V to 9.5 V, more preferably from 4.0 V to 9.0 V, even more preferably from 4.5 V to 8.5 V, most preferably from 5.0 V to 8.0 V and even most preferably from 5.2 V to 7.8 V or from 5.5 V to 7.5 V.

The electrolysis conditions comprising high voltage and high current density ensure maximum HBr conversion (>50%) per pass and formation of two-phases system as a liquid effluent 9.

For example, the electrolysis conditions comprise a temperature of the solution during electrolysis that is ranging from 20 to 100°C; preferably from 40 to 95°C; more preferably from 50 to 90°C; and even more preferably from 60 to 85°C.

### As regards step d) of recovering a liquid effluent 9 comprising bromine from the anode side

The liquid effluent 9 comprises produced bromine, water and possibly unreacted hydrogen bromide. In an embodiment, step d) further comprises recovering a gaseous effluent 19 comprising hydrogen at the cathode side.

In a preferred embodiment, step d) of recovering a liquid effluent 9 from the anode chamber comprises cooling the liquid effluent 9 at a temperature ranging from 10 to 40°C before the decanting step e). This can be done using one or more heat exchangers.

### As regards the decanting step e)

The decanting step (e) is performed in a decanter 11. The second liquid phase 15 comprising unreacted hydrogen bromide (HBr) is a supernatant that is over the first liquid phase 17 comprising bromine (Br₂). The second liquid phase 15 is then going over a wall present within the decanter 11 so that it can be evacuated through a storage tank 25, which can be in fluidic connection with the hydrogen bromide aqueous solution 5, so that the unreacted hydrogen bromide can be recovered and reused into the process for bromine production of the present disclosure.

The decanting step e) is performed for a time sufficient to obtain a two-phase separation. For example, the decanting step e) is performed during a time of at least 10 minutes; preferably during a time ranging from 10 minutes to 1 hour.

As the pressure into the decanter 11 can be elevated due to the continuous incoming flow of the liquid effluent 9, the decanter 11 can further comprise a degassing outlet 13 that can be useful for removing the vapours, such as oxygen and/or air. In an embodiment, the decanting step e) can be performed at a pressure of at least 0.12 MPa to avoid vapor formation so that the bromine is kept in a liquid phase.

For example; the decanting step e) is performed at a pressure of at least 0.12 MPa; preferably at least 0.15 MPa, more preferably at least 0.20 MPa; and/or at most 0.5 MPa.

### As regards the optional drying step f)

In an embodiment, when the decanting step e) comprises recovering the first liquid phase 17 comprising bromine; a drying step f) can be performed on the said first liquid phase 17. For example, drying step f) is performed in a drying unit 21 using a molecular sieve. The final product is or comprise dry bromine 23. Said molecular sieves could be, for instance molecular sieves 3Å, which is a commercial product used for drying (CAS 308080-99-1).

### Example

A symmetric zero-gap custom made electrolytic cell with an active area of 40 cm² was assembled to perform the electrolysis tests. The cell comprised titanium end plates, carbon loaded polymer channel plates, gas diffusion electrodes made of carbon cloth and reinforced Nafion^{™} N324 membrane.

The Nafion^{™} N324 is a perfluorosulfonic acid (PFSA) cation exchange membrane, combining outstanding chemical resistance with a strong polytetrafluoroethylene (PTFE) fiber reinforcement.

The cell was put in a heated shelf to maintain the operating temperature at 80 °C and liquid effluents were passed through a heat exchanger at 20 °C to avoid evaporation.

The HBr azeotrope (cca. 48.3 wt.% of HBr in water) was fed to the anode side using a teflonized peristatic pump at a flow rate of 20 mL/min. To avoid membrane drying, the cathode side was fed with a stream of water at a flow rate of 10 mL/min.

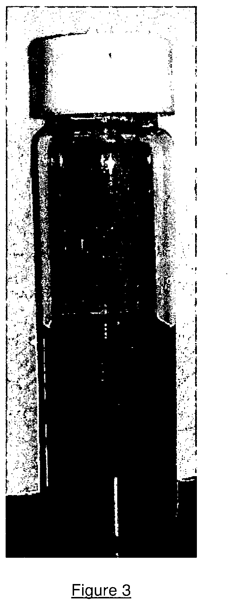

The current density of the cell was set to 5 kA/m² and the operating voltage appeared to be between 4.5 to 4.9V, fluctuating over the time. The liquid effluent from anode side was left to settle down and after ~15 min clear separation of two phases was observed, as demonstrated on figure 3 illustrating the sample that has been obtained.

Once flow of water to cathode side was increased to 25 mL/min, a stable operation of the cell was achieved with current density of 7 kA/m² and operating voltage of 5.6V.

## Claims

1. A process for bromine production comprising the following steps:
a) providing one or more electrolytic cells (3) each comprising an anode, a cathode and an ion-exchange membrane placed between the anode and the cathode;
b) providing a first input flow at the anode side of the one or more electrolytic cells (3) that is or comprises a hydrogen bromide aqueous solution (5); and a second input flow at the cathode side of the one or more electrolytic cells (3) that is or comprises water (7) or an aqueous solution;
c) performing an electrolysis to convert at least a part of the hydrogen bromide of the hydrogen bromide aqueous solution (5) into bromine by operating the one or more electrolytic cells (3) under electrolysis conditions comprising a voltage of at least 2.5 V; and
d) recovering a liquid effluent (9) comprising bromine from the anode side;
the process is **characterized in that** it further comprises a decanting step e) comprising passing the liquid effluent (9) comprising bromine in a decanter (11) to obtain a first liquid phase (17) comprising bromine and a second liquid phase (15) comprising unreacted hydrogen bromide; and optionally recovering the first liquid phase (17) comprising bromine.

2. The process according to claim 1, **characterized in that** the electrolysis conditions comprise a voltage of at least 4.0 V; preferably ranging from 4.0 to 10.0 V.

3. The process according to claim 1 or 2, **characterized in that** the electrolysis conditions comprise an anode current density ranging from 4.0 to 10 kA/m²; preferably, from 4.5 to 9.0 kA/m²; more preferably, from 5.0 to 8.0 kA/m².

4. The process according to any one of claim 1 to 3, **characterized in that** in step c) the temperature of the solution during electrolysis ranges from 20 to 100°C; preferably from 60 to 85°C.

5. The process according to any one of claim 1 to 4, **characterized in that** the hydrogen bromide aqueous solution (5) comprises from 30 to 48.3 wt.% of hydrogen bromide based on the total weight of the hydrogen bromide aqueous solution (5); or comprises at most 48.3 wt.% of hydrogen bromide based on the total weight of the hydrogen bromide aqueous solution (5).

6. The process according to any one of claim 1 to 5, **characterized in that** the ion-exchange membrane is a cation-exchange membrane;. with preference, the cation-exchange membrane further comprises an ionomer comprising fluoropolymer having one or more sulfonic acid groups.

7. The process according to any one of claim 1 to 6, **characterized in that** the decanting step e) is performed during a time of at least 10 minutes; preferably during a time ranging from 10 minutes to 1 hour.

8. The process according to any one of claim 1 to 7 is **characterized in that** the anode comprises an anode catalyst and the cathode comprises a cathode catalyst, and **in that** the anode catalyst and/or the cathode catalyst are or comprise one or more transition metal-based catalysts comprising ruthenium, rhodium, palladium, osmium, iridium, platinum, titanium, cobalt, iron, nickel, niobium, molybdenum, alloys of titanium, alloys of cobalt, alloys of iron, alloys of nickel, alloys of niobium, alloys of molybdenum, oxides of ruthenium, oxides of rhodium, oxides of palladium, oxides of osmium, oxides of iridium, and oxides of platinum and any mixtures thereof.

9. The process according to any one of claim 1 to 8, **characterized in that** step d) of recovering a liquid effluent (9) from the anode chamber comprises cooling the liquid effluent (9) at a temperature ranging from 10 to 40°C before the decanting step e).

10. The process according to any one of claim 1 to 9, **characterized in that** the decanting step e) comprises recovering the first liquid phase (17) comprising bromine and **in that** said process further comprises a drying step f) performed on the said first liquid phase (17); with preference, the drying step f) is performed using a molecular sieve.

11. The process according to any one of claim 1 to 10, **characterized in that** the second input comprises an aqueous solution of one or more mineral acids; with preference, the aqueous solution of one or more mineral acids has a pH ranging from 0.1 to 5.0 and/or comprises one or more selected from hydrochloric acid, nitric acid, phosphoric acid, sulfuric acid, boric acid, hydrofluoric acid, hydrobromic acid, perchloric acid, hydroiodic acid or any mixtures thereof.

12. The process according to any one of claims 1 to 11 is **characterized in that** the decanting step e) is performed at a pressure of at least 0.15 MPa.

13. An installation (1) for bromine production according to the process of any one of claims 1 to 12; wherein the installation (1) comprises one or more electrolytic cells (3) comprising an anode, a cathode, an anode chamber, a cathode chamber and a solid polymer electrolyte membrane separating the anode chamber from the cathode chamber; the installation (1) is **characterised in that** it comprises at least one decanter (11) and means to convey the liquid effluent (9) exiting the anodic chamber of the one or more electrolytic cells (3) to a decanter (11).

14. The installation (1) according to claim 13 is **characterized in that** the one or more electrolytic cells (3) are selected from zero-gap electrolytic, cells two-gap electrolytic cells, catholyte-containing one-gap electrolytic cells and catholyte-free one-gap electrolytic cells; preferably the one or more electrolytic cells (3) are zero-gap electrolytic cells.

15. The installation (1) according to claim 13 or 14 is **characterized in that** the means to convey the liquid effluent (9) exiting the anodic chamber of the one or more electrolytic cells (3) to a decanter (11) comprises one or more heat exchangers and/or **in that** the installation comprises a drying unit (21) comprising one or more molecular sieves.
